# FASCICULE DE BREVET EUROPEEN

(11) **EP 3 568 905 B1**
(45) Date de publication et mention de la délivrance du brevet: **08.03.2023**
(21) Numéro de dépôt: 18703046.5
(22) Date de dépôt: 09.01.2018
(51) Int. Cl.: H02M 7/487, B60L 1/00, B60L 53/22, B60L 55/00, H02M 1/42, H02M 7/797, H02M 7/219, H02J 7/02

(54) **CHARGEUR DE BATTERIE D'ACCUMULATEURS ÉLECTRIQUES BIDIRECTIONNEL**
BIDIREKTIONALES LADEGERÄT FÜR ELEKTRISCHEN AKKUMULATOR
BIDIRECTIONAL ELECTRICAL ACCUMULATOR BATTERY CHARGER

(30) Priorité: 12.01.2017 FR 1750251
(43) Date de publication de la demande: 20.11.2019
(73) Titulaire: Renault s.a.s, 92100 Boulogne Billancourt (FR); NISSAN MOTOR CO., LTD., Yokohama-shi, Kanagawa 221-0023 (JP)
(72) Inventeur: SAKR, Nadim, 75014 Paris (FR)
(74) Mandataire: Renault Group
(86) Numéro de dépôt international: PCT/FR2018/050042
(87) Numéro de publication internationale: WO 2018/130773

(56) Documents cités:
- CHRISTEN DANIEL ET AL: "Ultra-fast charging station for electric vehicles with integrated split grid storage", 2015 17TH EUROPEAN CONFERENCE ON POWER ELECTRONICS AND APPLICATIONS (EPE'15 ECCE-EUROPE), JOINTLY OWNED BY EPE ASSOCIATION AND IEEE PELS, 8 septembre 2015 (2015-09-08), pages 1-11, XP032800324, DOI: 10.1109/EPE.2015.7309322
- YAMADA RYUJI ET AL: "A battery charger with 3-phase 3-level T-type PFC", 2015 IEEE INTERNATIONAL TELECOMMUNICATIONS ENERGY CONFERENCE (INTELEC), IEEE, 18 octobre 2015 (2015-10-18), pages 1-5, XP032968695, DOI: 10.1109/INTLEC.2015.7572419
- LIN B-R ET AL: "Eight-switch, three-phase rectifier for power factor correction", IEE PROCEEDINGS: ELECTRIC POWER APPLICATI, INSTITUTION OF ELECTRICAL ENGINEERS, GB, vol. 151, no. 6, 19 octobre 2004 (2004-10-19), pages 666-672, XP006022905, ISSN: 1350-2352, DOI: 10.1049/IP-EPA:20040977
- JOHANN W. KOLAR ET AL: "The Essence of Three-Phase PFC Rectifier Systems-Part I", IEEE TRANSACTIONS ON POWER ELECTRONICS, vol. 28, no. 1, 1 janvier 2013 (2013-01-01), pages 176-198, XP055389125, USA ISSN: 0885-8993, DOI: 10.1109/TPEL.2012.2197867
- YU FANG ET AL: "Study on bidirectional-charger for electric vehicle applied to power dispatching in smart grid", 2016 IEEE 8TH INTERNATIONAL POWER ELECTRONICS AND MOTION CONTROL CONFERENCE (IPEMC-ECCE ASIA), IEEE, 22 May 2016 (2016-05-22), pages 2709-2713, XP032924713, DOI: 10.1109/IPEMC.2016.7512726 [retrieved on 2016-07-13]

## Description

La présente invention se rapporte à un chargeur de batterie d'accumulateurs électriques bidirectionnel.

Il est bien connu dans l'art antérieur du domaine de l'électrotechnique qu'un chargeur de batterie d'accumulateurs électriques comprend un étage de correction du facteur de puissance (aussi connu sous le nom anglophone de Power Factor Correction, PFC) et un étage de conversion continu-continu (aussi connu sous l'abréviation DC-DC) pour convertir la tension continue et le courant obtenus en sortie de l'étage de correction du facteur de puissance en tension/courant de recharge adapté pour la batterie.

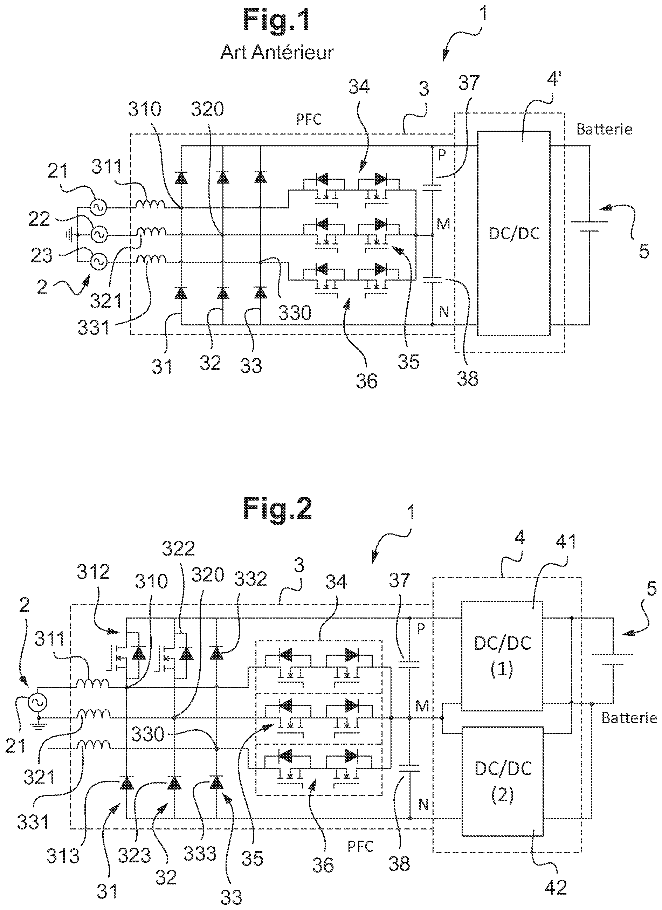

On connaît notamment, en référence à la figure 1 d'art antérieur, un chargeur 1 de batterie d'accumulateurs électriques 5, apte à recevoir une tension électrique alternative et à la convertir en une tension continue pour recharger ladite batterie, ledit chargeur comprenant un étage de correction du facteur de puissance 3 et un étage de conversion continu-continu 4', l'étage de correction du facteur de puissance 3 comprenant un redresseur de Vienne 3, tel que décrit dans le document EP94120245, fonctionnant en modulation de largeur d'impulsions, comportant au moins trois bras de pont 31, 32, 33 s'étendant chacun entre deux bornes de sortie P, N de l'étage de correction du facteur de puissance 3, chaque bras de pont 31, 32, 33 étant apte à être connecté en un point milieu 310, 320, 330, via une inductance 311, 321, 331, à une phase 21, 22, 23 d'un réseau électrique 2, le redresseur de Vienne 3 comprenant pour chaque bras de pont 31, 32, 33, un montage d'interrupteurs commandés 34, 35, 36 relié d'une part au point milieu 310, 320, 330 du bras de pont 31, 32, 33 correspondant et d'autre part en un point milieu de sortie M de l'étage de correction du facteur de puissance 3 ; pour chaque borne de sortie P, N de l'étage de correction du facteur de puissance 3, un condensateur de sortie 37, 38 est monté entre la borne de sortie P, N correspondante et le point milieu de sortie M de l'étage de correction du facteur de puissance 3. L'étage de conversion continu-continu comprend un composant de conversion continu-continu 4' monté en entrée aux bornes des bornes de sortie P, N de l'étage de correction du facteur de puissance 3 et en sortie aux bornes de la batterie 5.

On entend par bras de pont, un montage bien connu en électronique, constitué de deux composants (par exemple des diodes, transistor, thyristors) connectés en série, et avec un point milieu, pouvant servir de prise de contact, entre les deux.

Un tel chargeur est relativement efficace. Cependant, un tel chargeur électrique n'est pas bidirectionnel. Autrement dit, un tel redresseur permet de convertir le courant depuis une entrée alternative, de courant ou de tension, vers une charge continue, par exemple un accumulateur électrique, mais il ne permet pas la transmission, en sens inverse, de l'énergie électrique accumulée dans la batterie vers le réseau électrique d'entrée.

Or, dans des applications telles que les véhicules automobiles électriques, on souhaite qu'en plus de leur but premier de recharge de batterie, de tels chargeurs puissent autoriser la transmission de l'électricité accumulée dans la batterie vers le réseau électrique, par exemple dans le cadre d'une revente d'énergie électrique, ou encore pour utiliser la batterie d'accumulateurs électrique en tant que source externe d'énergie électrique. On parle de fonctionnement en restitution d'énergie.

L'article IEEE de Daniel Christen et al intitulé « Ultra-fast charging station for electric vehicles with integrated split grid storage » divulgue un chargeur réversible comportant un premier étage triphasé redresseur de Vienne et un second étage DC/DC, des transistors étant positionnés en anti-parallèle aux diodes sur chaque demi-bras de pont.

L'article IEEE de Ryuji Yamada et al intitulé « A battery charger with 3-phase 3-level T-type PFC » divulgue un chargeur unidirectionnel comportant un premier étage triphasé de Vienne et un second étage comportant deux DC/DC.

L'article IEE Proceedings de B-R Lin et al intitulé « Eight-switch, three-phase rectifier for power factor correction » divulgue un chargeur réversible comportant un premier étage triphasé redresseur de Vienne connecté à une charge, le premier étage n'étant commandé que sur deux bras, afin d'améliorer le facteur de puissance.

L'article IEEE de Johann W. Kolar et al, intitulé « The Essence of Three-Phase PFC Rectifier Systems - Part I » analyse différents types de redresseurs PFC unidirectionnels.

L'article IEEE de Yu Fang et al intitulé « Study on bidirectionnel charger for electric vehicle applied to power dispatching in smart grid» divulgue un chargeur réversible comportant un premier étage triphasé redresseur de Vienne et un second étage comportant deux DC/DC.

Aussi, il existe le besoin d'un chargeur de batterie bidirectionnel, apte à fonctionner en recharge et en restitution d'énergie, efficace et relativement peu coûteux à produire.

On propose un chargeur de batterie d'accumulateurs électriques pour un véhicule automobile électrique, apte à recevoir une tension électrique alternative et à la convertir en une tension continue pour recharger ladite batterie, ledit chargeur comprenant un étage de correction du facteur de puissance et un étage de conversion continu-continu, ledit étage de correction du facteur de puissance comprenant un redresseur de Vienne, fonctionnant en modulation de largeur d'impulsions, comportant au moins trois bras de pont s'étendant chacun entre deux bornes de sortie de l'étage de correction du facteur de puissance, chaque bras de pont étant apte à être connecté en un point milieu, via une inductance, à une phase d'un réseau électrique, ledit redresseur de Vienne comprenant pour chaque bras de pont, un montage d'interrupteurs commandés relié d'une part au point milieu dudit bras de pont correspondant et d'autre part en un point milieu de sortie (M) de l'étage de correction du facteur de puissance, pour chaque borne de sortie (P, N) de l'étage de correction du facteur de puissance, un condensateur de sortie est monté entre ladite borne de sortie (P,N) correspondante et le point milieu de sortie (M) de l'étage de correction du facteur de puissance.

Au moins deux bras de pont dudit redresseur de Vienne comprennent chacun un unique transistor à effet de champ à grille isolée bidirectionnel et une diode, montés de part et d'autre du point milieu du bras de pont correspondant; et ledit étage convertisseur continu-continu comprend deux dispositifs de conversion continu-continu, chacun étant connecté en entrée en parallèle avec l'un desdits condensateurs de sortie de l'étage de correction du facteur de puissance et en sortie aux bornes de ladite batterie, de telle sorte que le chargeur est apte à autoriser le passage d'un courant électrique depuis la batterie vers lesdites bornes d'entrée. Lorsque seuls deux bras du pont comportent un transistor à effet de champ à grille isolée bidirectionnel, les autres bras du pont comprennent chacun deux diodes montées de part et d'autre du point milieu du bras de pont correspondant.

Ainsi, on peut obtenir un chargeur bidirectionnel de batterie ne comprenant qu'un nombre réduit de transistors à effet de champ à grille isolée bidirectionnel, deux ou trois selon le réseau électrique auquel il est connecté, ce qui permet de réduire le coût de fabrication, tout en conservant l'efficacité d'un redresseur de Vienne. La réduction du nombre de transistors à effet de champ à grille isolée bidirectionnel est rendu possible par l'agencement particulier de l'invention et par l'utilisation avantageuse de deux convertisseurs continu-continu isolés en sortie dans l'étage de conversion continu-continu.

Le chargeur comprend un premier interrupteur additionnel installé entre lesdits montage d'interrupteurs commandés et le point milieu de sortie de l'étage de correction du facteur de puissance, et un deuxième interrupteur additionnel monté entre lesdits montage d'interrupteurs commandés et une borne de sortie de l'étage de correction du facteur de puissance, de telle sorte que lorsque le premier interrupteur additionnel est fermé tandis que le deuxième interrupteur additionnel est ouvert, le chargeur est apte à recharger la batterie depuis le réseau électrique, et lorsque le premier interrupteur additionnel est ouvert tandis que le deuxième interrupteur additionnel est fermé, le chargeur est apte à transférer l'énergie accumulée dans la batterie vers le réseau électrique en utilisant les deux convertisseurs continu- continu de l'étage de conversion continu-continu.Ainsi, on peut obtenir un chargeur bidirectionnel permettant de fournir en restitution une puissance égale à la puissance disponible en recharge de la batterie.

Avantageusement et de manière non limitative, deux bras de pont sont destinés à être connectés à une phase d'un réseau électrique monophasé, seuls lesdits deux bras de pont étant destinés à être connectés à une phase d'un réseau électrique monophasé. Ainsi, on peut adapter un tel chargeur de manière relativement simple à un réseau électrique monophasé, en optimisant en particulier le nombre de MOSFET bidirectionnels employés.

Avantageusement et de manière non limitative, trois bras de pont sont destinés à être connectés chacun à une phase d'un réseau électrique triphasé, chacun des trois bras de pont comprenant un transistor à effet de champ à grille isolée et une diode, montés de part et d'autre du point milieu du bras de pont correspondant. Ainsi, on peut adapter un tel chargeur de manière relativement simple à un réseau électrique triphasé, en optimisant en particulier le nombre de MOSFET bidirectionnels employés.

Avantageusement et de manière non limitative, au moins un transistor à effet de champ à grille isolée bidirectionnel comprend un transistor à effet de champ à grille métal-oxyde (MOSFET) bidirectionnel. Ainsi, on peut optimiser le coût de fabrication d'un tel chargeur tout en assurant une commande relativement optimale de l'étage de correction du facteur de puissance.

Avantageusement et de manière non limitative, lesdits montages d'interrupteurs commandés comprennent chacun deux transistors à effet de champ à grille métal-oxyde (MOSFET) de puissance, montés en polarisation inverse l'un par rapport à l'autre. Ainsi, les interrupteurs commandés sont relativement simple à commander, présentent une commutation rapide, et sont peu coûteux à produire.

Avantageusement et de manière non limitative, au moins un convertisseur continu-continu est dimensionné pour fonctionner à une puissance de 11kW. Ainsi, le chargeur est adapté pour un fonctionnement dans un environnement de fortes puissances, par exemple pour la recharge d'un véhicule automobile électrique.

L'invention concerne aussi un véhicule automobile électrique comprenant une batterie d'accumulateurs électriques et un chargeur de batterie tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 est un schéma électrique d'un chargeur de batterie de l'art antérieur ;
- la figure 2 est un schéma électrique d'un chargeur de batterie pour un réseau électrique monophasé
- la figure 3 est un schéma électrique d'un chargeur de batterie pour un réseau électrique triphasé et
- la figure 4 est un schéma électrique d'un chargeur de batterie pour un réseau électrique triphasé selon un mode de réalisation de l'invention

En référence à la figure 2, un chargeur 1 de batterie d'accumulateurs électriques 5, en particulier pour un véhicule automobile électrique, comprend un étage de correction du facteur de puissance 3, plus connu sous le nom de Power Factor Correction, PFC, et un étage de conversion continu-continu 4.

L'étage de correction du facteur de puissance 3 permet de redresser la tension, ou le courant, d'entrée, et de lisser de signal de telle manière qu'en sortie de l'étage de correction du facteur de puissance 3, le signal alternatif, sinusoïdal d'entrée est converti en un signal continu.

L'étage de conversion continu-continu 4 quant à lui permet de convertir en une tension d'entrée continue en une autre, pour adapter la tension obtenue en sortie de l'étage de correction du facteur de puissance 3 afin de la faire correspondre à la tension attendue par la batterie 5 pour la recharge.

L'étage de correction du facteur de puissance 3 correspond ici à un redresseur de Vienne, qui est un dispositif redresseur de tension fonctionnant en modulation de largeur d'impulsions.

Le redresseur de Vienne comprend trois bras de pont 31, 32, 33, montés chacun à deux bornes de sortie P, N, une borne positive P, et une borne négative N.

Chaque bras de pont 31, 32, 33 présente un point milieu 310, 320, 330 auquel est connecté un montage d'interrupteurs commandé 34, 35, 36.

Chaque montage d'interrupteurs commandé 34, 35, 36 comprend deux transistors à effet de champ à grille métal-oxyde de puissance, plus connus sous le nom de MOSFET de puissance, montés en polarisation inverse l'un par rapport à l'autre. On entend par polarisation inverse du montage des MOSFET de puissance, le fait que le corps de diode (*body diode* en anglais) de chaque MOSFET de puissance est polarisé de manière inverse par rapport à l'autre MOSFET de puissance du même interrupteur.

Chaque montage d'interrupteurs commandé 34, 35, 36 est relié d'une part au point milieu 310, 320, 330 du bras de pont 31, 32, 33 correspondant et d'autre part en un point milieu de sortie M de l'étage de correction du facteur de puissance 3.

Ces montages d'interrupteurs commandés 34, 35, 36 sont destinés à être commandés sensiblement de la même manière que les montages d'interrupteurs d'un redresseur de Vienne de l'art antérieur.

Un premier bras de pont 31 et un deuxième bras de pont 32 sont connectés aux bornes d'une phase 21 d'un réseau électrique monophasé 2. Le troisième bras de pont 33 n'est relié à aucune phase électrique.

Le troisième bras de pont 33 comprend deux diodes 332, 333 montés de part et d'autre du point milieu 330 du troisième bras de pont 33, selon la même polarité vu des bornes de sortie P, N de l'étage correction du facteur de puissance 3.

Le montage des diodes de chaque bras de pont 31, 32, 33 est effectué de telle sorte que le passage de courant est autorisé depuis la borne négative N vers la borne positive P.

Les premier 31 et deuxième 32 bras de pont comprennent chacun une diode 313, 323, aussi appelée diode de redressement, montée entre la borne négative N et le point milieu 310, 320 du bras correspondant 31, 32.

Les premier 31 et deuxième 32 bras de pont comprennent chacun un transistor à effet de champ à grille isolée bidirectionnel 312, 322, ici un transistor à effet de champ à grille métal-oxyde bidirectionnel, plus connu sous l'appellation MOSFET bidirectionnel.

On emploie ici des MOSFET bidirectionnel de puissance, car l'usage des véhicules électriques implique des courants forts. Cependant un tel montage peut aussi être adapté pour des courants faibles.

Pour chaque bras 31, 32 le MOSFET bidirectionnel 312, 322 est monté de telle sorte que le corps de diode (body diode en anglais) du MOSFET est orienté selon la même polarité que la diode 313, 323 montée sur le même bras 31, 32, vu des bornes de sortie P, N de l'étage correction du facteur de puissance 3.

Pour chaque borne de sortie P, N de l'étage de correction du facteur de puissance 3, un condensateur de sortie 37, 38 est monté entre la borne de sortie P, N correspondante et le point milieu de sortie M de l'étage de correction du facteur de puissance 3.

L'étage de conversion continu-continu 4, comprend deux dispositifs de conversion continu-continu 41, 42 isolés, plus simplement appelés DC-DC 41, 42 isolés.

Chaque DC-DC 41, 42 est monté en entrée en parallèle d'un condensateur de sortie 37, 38.

Ici les DC-DC 41, 42 sont choisis afin de pouvoir fonctionner à des puissances de 22kW, mais on pourra adapter l'invention à toute autre puissance de fonctionnement voulue.

Un premier DC-DC 41 est monté entre la borne de sortie positive P et le point milieu de sortie M, tandis qu'une deuxième DC-DC 42 est monté entre la borne de sortie négative N et le point milieu de sortie M.

En sortie, chaque DC-DC 41, 42 est connecté aux bornes de la batterie 5.

De cette manière, en recharge le fonctionnement et la commande du chargeur est sensiblement identique à celle d'un chargeur à redresseur de Vienne connu dans l'art antérieur, cependant ce chargeur est réversible et peut fournir l'électricité chargée dans la batterie 5 vers le réseau électrique 2, via le premier DC-DC 41, les MOSFET bidirectionnels 312, 322 et les interrupteurs commandés 34, 35. Les MOSFET bidirectionnels 312, 322 et les interrupteurs commandés 34, 35 forment un onduleur (convertisseur DC/AC) monophasé en pont commandé en modulation de largeur d'impulsions (MLI) connu par l'homme du métier.

Le DC-DC 41 contrôle la tension aux bornes de la capacité 37 à une tension supérieure à la tension crête du réseau électrique 2. Ainsi, quand les interrupteurs 312 et 35 sont fermés (ON) et les interrupteurs 322 et 34 sont ouverts (OFF), le courant restitué au réseau est croissant ; et quand les interrupteurs 312 et 35 sont ouverts (OFF) et les interrupteurs 322 et 34 sont fermés (ON), le courant restitué au réseau est décroissant et ceci quel que soit le signe de la tension réseau. De plus, pendant une alternance positive, on ferme éventuellement les interrupteurs 34 et 35 ou 312 et 322 pour faire décroître le courant. Alors que pendant une alternance négative, la fermeture des interrupteurs 34 et 35 ou des interrupteurs 312 et 322 fera croître le courant restitué au réseau. Cette possibilité de contrôler le signe de la pente du courant permet de contrôler la forme sinusoïdale du courant restitué au réseau et d'assurer la fonction onduleur.

Sur un réseau électrique monophasé 2, on remarque que la puissance de restitution, soit en décharge de la batterie, est inférieure à la puissance maximale P de charge de la batterie, ce qui est lié au fait qu'en décharge, seul le premier DC-DC 41 dimensionné pour P/2 est employé, tandis qu'en charge, les deux DC-DC sont employés.

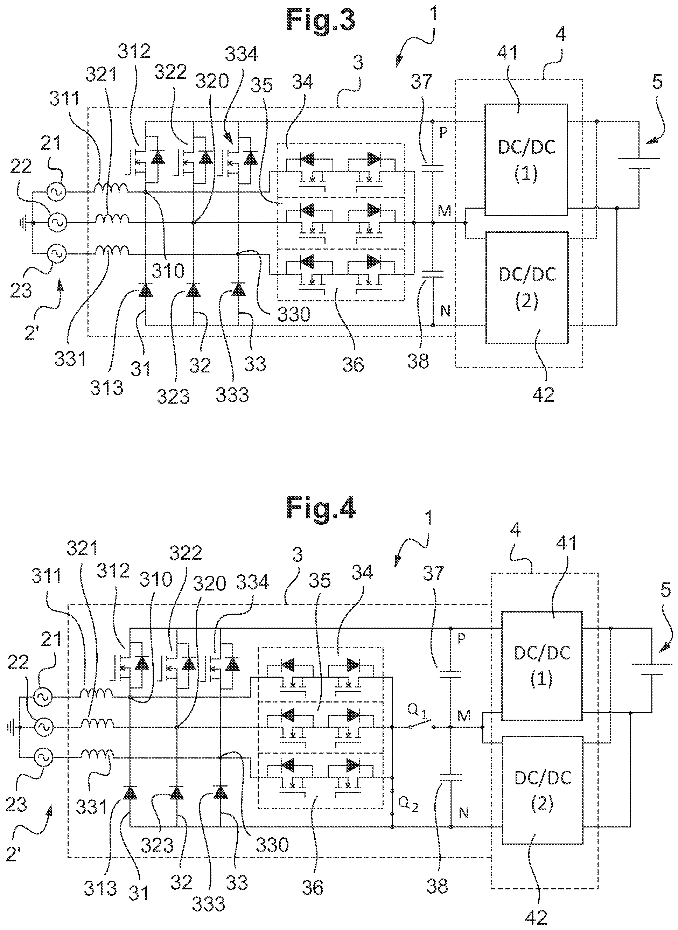

En référence à la figure 3, le chargeur 1 est connecté à un réseau électrique 2' triphasé.

La structure du chargeur 1 est identique à celle du chargeur de la figure 2 sauf les modifications indiquées ci-après.

Chaque bras de pont 31, 32, 33 est connecté à une phase respective 21, 22, 23 d'un réseau électrique triphasé 2'.

Aussi, comme les premier 31 et deuxième 32 bras de pont dans le convertisseur de la figure 2, ici le troisième bras de pont 33 comprend un transistor à effet de champ à grille isolée bidirectionnel 334 ici un transistor à effet de champ à grille métal-oxyde bidirectionnel, plus connu sous l'appellation MOSFET bidirectionnel,

Le MOSFET bidirectionnel 334 du troisième bras 33 est monté de telle sorte que le corps de diode (body diode en anglais) du MOSFET 334 est orienté selon la même polarité que la diode 333 montée sur le même bras 33, vu des bornes de sortie P, N de l'étage correction du facteur de puissance 3.

Ainsi, le MOSFET bidirectionnel 334 du troisième bras 33 remplace la diode 332 montée, sur le chargeur 1 de la figure 2 entre la borne positive P de sortie et le point milieu 330 du troisième bras 33.

Cette adaptation permet alors d'obtenir un chargeur bidirectionnel 1 adapté pour être connecté à un réseau électrique triphasé 2', afin de recharger la batterie 5, et adapté pour transmettre l'énergie accumulée par la batterie 5 vers le réseau électrique triphasé 2', via le premier DC-DC 41, les MOSFET bidirectionnels 312, 322, 334 et les interrupteurs commandés 34, 35, 36. Les MOSFET bidirectionnels 312, 322, 334 et les interrupteurs commandés 34, 35, 36 forment un onduleur (convertisseur DC/AC) triphasé en pont commandé en modulation de largeur d'impulsions (MLI) connu par l'homme du métier. Le

DC-DC 41 contrôle la tension aux bornes de la capacité 37 à une tension supérieure à la tension crête entre phases du réseau électrique 2'.Sachant que lorsque le chargeur fonctionne en mode de restitution d'énergie, seul le premier DC-DC 41 est employé, la puissance fournie est moitié de celle disponible en recharge. Par exemple, si le chargeur est adapté pour recharger la batterie avec une puissance de 22kW, il fonctionnera en restitution avec une puissance de 11kW.

Afin de pouvoir augmenter la puissance de restitution, on propose aussi un mode de réalisation, en référence à la figure 4, dans laquelle le chargeur 1 est connecté à un réseau électrique triphasé 2'.

Le chargeur 1 est identique à celui de la figure 3, sauf pour les modifications indiquées ci-après.

Le chargeur 1 comprend dans l'étage de correction du facteur de puissance 3 un premier interrupteur additionnel Q1 installé entre les montages d'interrupteurs commandés 34, 35, 36 et le point milieu de sortie M de l'étage de correction du facteur de puissance.

Le chargeur 1 comprend aussi dans l'étage de correction du facteur de puissance 3 un deuxième interrupteur additionnel Q2 monté entre les montages d'interrupteurs commandés 34, 35, 36 et la borne de sortie négative N.

Ainsi, lorsque le premier interrupteur additionnel Q1 est fermé et que le deuxième interrupteur additionnel Q2 est ouvert, le chargeur peut recharger la batterie depuis le réseau électrique triphasé 2', de la même manière qu'un chargeur comprenant un redresseur de Vienne de l'art antérieur.

Lorsque le premier interrupteur additionnel Q1 est ouvert et que le deuxième interrupteur additionnel Q2 est fermé, le chargeur 1 peut alors fonctionner en restitution d'énergie, en transférant le courant électrique accumulée dans la batterie 5 vers le réseau électrique triphasé 2' en utilisant les deux DC-DC 41, 42 de l'étage de conversion continu-continu 4.

Dans ce mode de réalisation, le DC-DC 41 (42) contrôle la tension aux bornes de la capacité 37 (28) à une tension supérieure à la moitié de la tension crête entre phases du réseau électrique 2'. Les MOSFET bidirectionnels 312, 322, 334 et les interrupteurs commandés 34, 35, 36 forment un onduleur (convertisseur DC/AC) triphasé en pont commandé en modulation de largeur d'impulsions (MLI) connu par l'homme du métier.

Ainsi, on peut faire fonctionner le chargeur 1 en mode de restitution avec une même puissance que celle disponible en mode de charge, par exemple à des puissances de 22kW.

Un tel chargeur 1 comprenant les deux interrupteurs additionnels Q1, Q2 pourra être adapté au chargeur de la figure 2, connecté à un réseau électrique monophasé 2, en positionnant les deux interrupteurs additionnels Q1 et Q2 aux mêmes emplacements dans l'étage de correction du facteur de puissance 3.

## Revendications

1. Chargeur (1) de batterie (5) d'accumulateurs électriques pour un véhicule automobile électrique, apte à recevoir une tension électrique alternative et à la convertir en une tension continue pour recharger ladite batterie (5), ledit chargeur (1) comprenant un étage de correction du facteur de puissance (3) et un étage de conversion continu-continu (4), ledit étage de correction du facteur de puissance (3) comprenant un redresseur de Vienne (3) comportant au moins trois bras de pont (31, 32, 33) s'étendant chacun entre deux bornes de sortie (P,N) de l'étage de correction du facteur de puissance (3),
chaque bras de pont (31, 32, 33) étant apte à être connecté en un point milieu (310, 320, 330), via une inductance (311, 321, 331), à une phase (21, 22, 23) d'un réseau électrique (2),
ledit redresseur de Vienne (3) comprenant pour chaque bras de pont (31, 32, 33), un montage d'interrupteurs commandés (34, 35, 36) relié d'une part au point milieu (310, 320, 330) dudit bras de pont (31, 32, 33) correspondant et d'autre part en un point milieu de sortie (M) de l'étage de correction du facteur de puissance (3) ;
pour chaque borne de sortie (P, N) de l'étage de correction du facteur de puissance (3), un condensateur de sortie (37, 38) est monté entre ladite borne de sortie (P, N) correspondante et le point milieu de sortie (M) de l'étage de correction du facteur de puissance (3),
**caractérisé en ce qu'**au moins deux bras de pont (31, 32) dudit redresseur de Vienne (3) comprennent chacun un unique transistor à effet de champ à grille isolée bidirectionnel (312, 322, 334) et une diode (313, 323, 333), montés de part et d'autre du point milieu (310, 320) du bras de pont (31, 32) correspondant; et **en ce que** ledit étage convertisseur continu-continu (4) comprend deux dispositifs de conversion continu-continu (41, 42), chacun étant connecté en entrée en parallèle avec l'un desdits condensateurs de sortie (37, 38) de l'étage de correction du facteur de puissance (3) et en sortie aux bornes de ladite batterie (5), de telle sorte que le chargeur (1) est apte à autoriser le passage d'un courant électrique depuis la batterie (5) vers ledit réseau électrique (2) et **en ce qu'**il comprend un premier interrupteur additionnel (Q1) installé entre lesdits montages d'interrupteurs commandés (34, 35, 36) et le point milieu de sortie (M) de l'étage de correction du facteur de puissance (3), et un deuxième interrupteur additionnel (Q2) monté entre lesdits montages d'interrupteurs commandés (34, 35, 36) et une borne de sortie (N) de l'étage de correction du facteur de puissance (3), de telle sorte que lorsque le premier interrupteur additionnel (Q1) est fermé et que le deuxième interrupteur additionnel (Q2) est ouvert, le chargeur (1) est apte à recharger la batterie (5) depuis le réseau électrique (2, 2'), et lorsque le premier interrupteur additionnel (Q1) est ouvert et que le deuxième interrupteur additionnel (Q2) est fermé, le chargeur (1) est apte à transférer l'énergie accumulée dans la batterie (5) vers le réseau électrique (2, 2') en utilisant les deux convertisseurs continu-continu (41, 42) de l'étage de conversion continu-continu (4).

2. Chargeur (1) de batterie (5) selon la revendication 1, **caractérisé en ce que** deux bras de pont (31, 32) sont destinés à être connectés à une phase (21) d'un réseau électrique monophasé (2), seuls lesdits deux bras de pont (31, 32) comprenant un transistor à effet de champ à grille isolée (312, 322) et une diode (313, 323), montés de part et d'autre du point milieu (310, 320) du bras de pont (31, 32) correspondant.

3. Chargeur (1) de batterie (5) selon la revendication 1 ou 2, **caractérisé en ce que** trois bras de pont (31, 32, 33) sont destinés à être connectés chacun à une phase (21, 22, 23) d'un réseau électrique triphasé (2'), chacun des trois bras de pont (31, 32, 33) comprenant un transistor à effet de champ à grille isolée (312, 322, 334) et une diode (313, 323, 333), montés de part et d'autre du point milieu (310, 320, 330) du bras de pont (31, 32, 33) correspondant.

4. Chargeur (1) de batterie (5) selon la revendication 1 **caractérisé en ce qu'**au moins un transistor à effet de champ à grille isolée bidirectionnel (312, 322, 334) comprend un transistor à effet de champ à grille métal-oxyde (MOSFET) bidirectionnel.

5. Chargeur (1) de batterie (5) selon la revendication 1 ou 2, **caractérisé en ce que** lesdits montages d'interrupteurs commandés (34, 35, 36) comprennent chacun deux transistors à effet de champ à grille métal-oxyde (MOSFET) de puissance, montés en polarisation inverse l'un par rapport à l'autre.

6. Chargeur (1) de batterie (5) selon l'une quelconque des revendications 1 à 5 **caractérisé en ce qu'**au moins un convertisseur continu-continu (41, 42) est dimensionné pour fonctionner à une puissance de 11kW.

7. Véhicule automobile électrique comprenant une batterie (5) d'accumulateurs électriques et un chargeur (1) de batterie (5) selon l'une quelconque des revendications 1 à 6.

## Patentansprüche

1. Ladegerät (1) für einen elektrischen Akkumulator (5) für ein Elektrokraftfahrzeug, das dazu fähig ist, eine elektrische Wechselspannung zu empfangen und diese in eine Gleichspannung zum Wiederaufladen des Akkumulators (5) umzuwandeln, wobei das Ladegerät (1) eine Leistungsfaktor-Korrekturstufe (3) und eine Gleichstrom-Gleichstrom-Umwandlungsstufe (4) beinhaltet, wobei die Leistungsfaktor-Korrekturstufe (3) einen Vienna-Gleichrichter (3) beinhaltet, der mindestens drei Brückenarme (31, 32, 33) umfasst, die sich jeweils zwischen zwei Ausgangsanschlüssen (P, N) der Leistungsfaktor-Korrekturstufe (3) erstrecken,
wobei jeder Brückenarm (31, 32, 33) dazu fähig ist, an einem Mittelpunkt (310, 320, 330) über eine Induktivität (311, 321, 331) mit einer Phase (21, 22, 23) eines elektrischen Netzes (2) verbunden zu sein,
wobei der Vienna-Gleichrichter (3) für jeden Brückenarm (31, 32, 33) eine Anordnung gesteuerter Schalter (34, 35, 36) beinhaltet, die einerseits mit dem Mittelpunkt (310, 320, 330) des entsprechenden Brückenarms (31, 32, 33) und andererseits mit einem Ausgangsmittelpunkt (M) der Leistungsfaktor-Korrekturstufe (3) verbunden ist;
wobei für jeden Ausgangsanschluss (P, N) der Leistungsfaktor-Korrekturstufe (3) ein Ausgangskondensator (37, 38) zwischen den entsprechenden Ausgangsanschluss (P, N) und den Ausgangsmittelpunkt (M) der Leistungsfaktor-Korrekturstufe (3) geschaltet ist, **dadurch gekennzeichnet, dass** mindestens zwei Brückenarme (31, 32) des Vienna-Gleichrichters (3) jeweils einen einzelnen bidirektionalen Isolierschicht-Feldeffekttransistor (312, 322, 334) und eine Diode (313, 323, 333) beinhalten, die zu beiden Seiten des Mittelpunkts (310, 320) des entsprechenden Brückenarms (31, 32) geschaltet sind; und dass die Gleichstrom-Gleichstrom-Umwandlungsstufe (4) zwei Gleichstrom-Gleichstrom-Umwandlungsvorrichtungen (41, 42) beinhaltet, die jeweils am Eingang parallel zu einem der Ausgangskondensatoren (37, 38) der Leistungsfaktor-Korrekturstufe (3) und am Ausgang mit den Anschlüssen des Akkumulators (5) verbunden sind, sodass das Ladegerät (1) dazu fähig ist, das Fließen eines elektrischen Stroms von dem Akkumulator (5) zu dem elektrischen Netz (2) zu gestatten, und dass es einen zusätzlichen ersten Schalter (Q1), der zwischen den Anordnungen gesteuerter Schalter (34, 35, 36) und dem Ausgangsmittelpunkt (M) der Leistungsfaktor-Korrekturstufe (3) installiert ist, und einen zusätzlichen zweiten Schalter (Q2), der zwischen die Anordnungen gesteuerter Schalter (34, 35, 36) und einen Ausgangsanschluss (N) der Leistungsfaktor-Korrekturstufe (3) geschaltet ist, beinhaltet, sodass, wenn der zusätzliche erste Schalter (Q1) geschlossen ist und der zusätzliche zweite Schalter (Q2) geöffnet ist, das Ladegerät (1) dazu fähig ist, den Akkumulator (5) von dem elektrischen Netz (2, 2') aus wiederaufzuladen, und, wenn der zusätzliche erste Schalter (Q1) geöffnet ist und der zusätzliche zweite Schalter (Q2) geschlossen ist, das Ladegerät (1) dazu fähig ist, die in dem Akkumulator (5) gespeicherte Energie an das elektrische Netz (2, 2') zu übertragen, unter Verwendung der zwei Gleichstrom-Gleichstrom-Wandler (41, 42) der Gleichstrom-Gleichstrom-Umwandlungsstufe (4).

2. Ladegerät (1) für einen Akkumulator (5) nach Anspruch 1, **dadurch gekennzeichnet, dass** zwei Brückenarme (31, 32) dazu bestimmt sind, mit einer Phase (21) eines einphasigen elektrischen Netzes (2) verbunden zu sein, wobei nur die zwei Brückenarme (31, 32) einen Isolierschicht-Feldeffekttransistor (312, 322) und eine Diode (313, 323) beinhalten, die zu beiden Seiten des Mittelpunkts (310, 320) des entsprechenden Brückenarms (31, 32) geschaltet sind.

3. Ladegerät (1) für einen Akkumulator (5) nach Anspruch 1 oder 2, **dadurch gekennzeichnet, dass** drei Brückenarme (31, 32, 33) dazu bestimmt sind, jeweils mit einer Phase (21, 22, 23) eines dreiphasigen elektrischen Netzes (2') verbunden zu sein, wobei jeder der drei Brückenarme (31, 32, 33) einen Isolierschicht-Feldeffekttransistor (312, 322, 334) und eine Diode (313, 323, 333) beinhaltet, die zu beiden Seiten des Mittelpunkts (310, 320, 330) des entsprechenden Brückenarms (31, 32, 33) geschaltet sind.

4. Ladegerät (1) für einen Akkumulator (5) nach Anspruch 1, **dadurch gekennzeichnet, dass** mindestens ein bidirektionaler Isolierschicht-Feldeffekttransistor (312, 322, 334) einen bidirektionalen Metall-Oxid-Feldeffekttransistor (MOSFET) beinhaltet.

5. Ladegerät (1) für einen Akkumulator (5) nach Anspruch 1 oder 2, **dadurch gekennzeichnet, dass** die Anordnungen gesteuerter Schalter (34, 35, 36) jeweils zwei Leistungs-Metall-Oxid-Feldeffekttransistoren (MOSFET) beinhalten, die mit zueinander entgegengesetzter Polarität geschaltet sind.

6. Ladegerät (1) für einen Akkumulator (5) nach einem beliebigen der Ansprüche 1 bis 5, **dadurch gekennzeichnet, dass** mindestens ein Gleichstrom-Gleichstrom-Wandler (41, 42) so ausgelegt ist, dass er mit einer Leistung von 11 kW arbeiten kann.

7. Elektrokraftfahrzeug, das einen elektrischen Akkumulator (5) und ein Ladegerät (1) für einen Akkumulator (5) nach einem beliebigen der Ansprüche 1 bis 6 beinhaltet.

## Claims

1. Charger (1) for an electrical accumulator battery (5) for an electric motor vehicle, which is able to receive an AC voltage and to convert it into a DC voltage in order to recharge said battery (5), said charger (1) comprising a power factor correction stage (3) and a DC-to-DC conversion stage (4), said power factor correction stage (3) comprising a Vienna rectifier (3) comprising at least three bridge arms (31, 32, 33) each extending between two output terminals (P, N) of the power factor correction stage (3),
each bridge arm (31, 32, 33) being able to be connected at a midpoint (310, 320, 330), via an inductor (311, 321, 331), to a phase (21, 22, 23) of an electric grid (2), said Vienna rectifier (3) comprising, for each bridge arm (31, 32, 33), an assembly of controlled switches (34, 35, 36) which is connected, on the one hand, to the midpoint (310, 320, 330) of said corresponding bridge arm (31, 32, 33) and, on the other hand, at an output midpoint (M) of the power factor correction stage (3);
for each output terminal (P, N) of the power factor correction stage (3), an output capacitor (37, 38) is connected between said corresponding output terminal (P, N) and the output midpoint (M) of the power factor correction stage (3),
**characterized in that** at least two bridge arms (31, 32) of said Vienna rectifier (3) each comprise a single bidirectional insulated-gate field-effect transistor (312, 322, 334) and a diode (313, 323, 333), connected on either side of the midpoint (310, 320) of the corresponding bridge arm (31, 32); and **in that** said DC-to-DC converter stage (4) comprises two DC-to-DC conversion devices (41, 42), each being connected at its input in parallel with one of said output capacitors (37, 38) of the power factor correction stage (3) and at the output to the terminals of said battery (5), in such a way that the charger (1) is able to allow an electric current to flow from the battery (5) to said electric grid (2) and **in that** it comprises a first additional switch (Q1) installed between said assemblies of controlled switches (34, 35, 36) and the output midpoint (M) of the power factor correction stage (3), and a second additional switch (Q2) connected between said assemblies of controlled switches (34, 35, 36) and an output terminal (N) of the power factor correction stage (3), in such a way that, when the first additional switch (Q1) is closed and the second additional switch (Q2) is open, the charger (1) is able to recharge the battery (5) from the electric grid (2, 2') and, when the first additional switch (Q1) is open and the second additional switch (Q2) is closed, the charger (1) is able to transfer the energy accumulated in the battery (5) to the electric grid (2, 2') using the two DC-to-DC converters (41, 42) of the DC-to-DC conversion stage (4).

2. Charger (1) for a battery (5) according to Claim 1, **characterized in that** two bridge arms (31, 32) are intended to be connected to a phase (21) of a single-phase electric grid (2), only said two bridge arms (31, 32) comprising an insulated-gate field-effect transistor (312, 322) and a diode (313, 323), connected on either side of the midpoint (310, 320) of the corresponding bridge arm (31, 32).

3. Charger (1) for a battery (5) according to Claim 1 or 2, **characterized in that** three bridge arms (31, 32, 33) are intended to each be connected to a phase (21, 22, 23) of a three-phase electric grid (2'), each of the three bridge arms (31, 32, 33) comprising an insulated-gate field-effect transistor (312, 322, 334) and a diode (313, 323, 333), connected on either side of the midpoint (310, 320, 330) of the corresponding bridge arm (31, 32, 33) .

4. Charger (1) for a battery (5) according to Claim 1, **characterized in that** at least one bidirectional insulated-gate field-effect transistor (312, 322, 334) comprises a bidirectional metal-oxide-semiconductor field-effect transistor (MOSFET).

5. Charger (1) for a battery (5) according to Claim 1 or 2, **characterized in that** said assemblies of controlled switches (34, 35, 36) each comprise two power metal-oxide-semiconductor field-effect transistors (MOSFETs), connected in reverse bias to one another.

6. Charger (1) for a battery (5) according to any one of Claims 1 to 5, **characterized in that** at least one DC-to-DC converter (41, 42) is sized to operate at a power of 11 kW.

7. Electric motor vehicle comprising an electrical accumulator battery (5) and a charger (1) for a battery (5) according to any one of Claims 1 to 6.
